# EUROPEAN PATENT APPLICATION

(11) **EP 2 823 709 A1**
(43) Date of publication of application: **14.01.2015**
(21) Application number: 13193309.5
(22) Date of filing: 18.11.2013
(51) Int. Cl.: A01N 57/34

(54) **The use of ionic salts containing phosphonium cation**

(30) Priority: 11.07.2013 PL 40464213
(71) Applicant: Akademia im. Jana Dlugosza, 42-200 Czestochowa (PL)
(72) Inventor: Balczewski, Piotr, 91-225 Lódz (PL); Biczak, Robert, 42-216 Czestochowa (PL); Pawlowska, Barbara, 42-120 Miedzno, pow, Klobucki, woj. slaskie (PL)
(74) Representative: Brodowska, Iwona

(57) **Abstract**

The essence of the invention is the use of ionic salts containing phosphonium cation and halide anion, especially iodide, as a means of herbicidal properties In the use according to the invention as ionic salts with the phosphonium cation and halide anion, is used, preferably triphenylmethylphosphonium iodide, triphenyl-n-pentylphosphonium iodide, triphenylheptylphosphonium iodide, triphenyldecylphosphonium iodide and triphenylhexadecylphosphonium iodide.

## Description

### Technical Field

The present invention relates to the use of ionic salts with phosphonium cation and halide anion, especially iodide, as a means of herbicidal properties, represented by formula [PR₄⁺]X⁻, wherein R is aryl or a straight or branched alkyl group CₙH₂ₙ₊₁ (n = 1 - 20), while X is any anion selected from the group consisting of a halide anion, preferably iodine, possessing so far unknown herbicidal activity.

### Background Art

The organic or organic-inorganic ionic salts are chemical compounds constructed solely of ions, an organic cation and an inorganic or organic anion. Such substances may include an imidazolium, pyridinium, pyrrolidinium, chinolinum, ammonium, sulfonium or phosphonium cation, wherein the positive charge is located on a nitrogen, sulfur or phosphorus atom, and among the anions may be mentioned, for example: halides, nitrates, tetrafluoroborates, and hexafluorophosphates. Connectivity options of anions and cations are practically unlimited and they reach the value of 10¹⁸. A special case of ionic salts are ionic liquids.

The unique properties of both salts and ionic liquids may lead to a wide variety of uses of these substances in all areas of the chemical industry, including the catalysis, extraction, synthesis, pharmaceutical and food industries, electrochemistry, biotechnology and agriculture.

It is known that phosphonium salts have various biological properties and can be used as bactericides, fungicides, algicides, cytostatics, plant growth regulating agents and others.¹⁻⁴ Herbicidal activity has also been reported for certain groups of phosphonium salts, other than those in the present application.^{5,6,7}

Surprisingly, it turned out that the ionic salts, especially represented by the formula [PR₄⁺]X⁻, wherein R is aryl or a straight or branched alkyl group C ₙH₂ₙ₊₁ (n = 1 - 20), while X is any anion selected from the group consisting of a halide anion, preferably iodine, have yet unexplored herbicidal properties.

Salts being the subject of the patent application are known and have so far been used in other fields, for example: triphenyl-n-pentylphosphonium iodide has been used in the preparation of urethane elastomers of epoxy resins, polyols and polyisocyanates.⁸ Triphenyldecylphosphonium iodide has been used for the synthesis of ethers and purification of superoxides and acetals.⁹

**Summary of invention**The essence of the invention is the use of ionic salts containing a phosphonium cation simultaneously with an halide anion represented by formula [PR₄⁺]X⁻, wherein R is aryl or a straight or branched alkyl group CₙH ₂ₙ₊₁ (n = 1 - 20), while X is any anion selected from the group consisting of a halide anion, preferably iodine, as a means of herbicidal properties. In the use, according to the invention, as ionic salts with the phosphonium cation and halide anion, are used, preferably triphenylmethylphosphonium iodide, triphenyl-n-pentylphosphonium iodide, triphenylheptylphosphonium iodide, triphenyldecylphosphonium iodide and triphenylhexadecylphosphonium iodide represented by formulas 1 to 5.

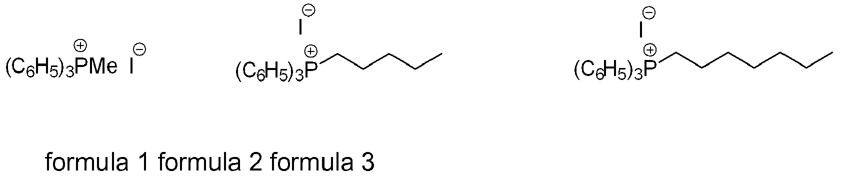

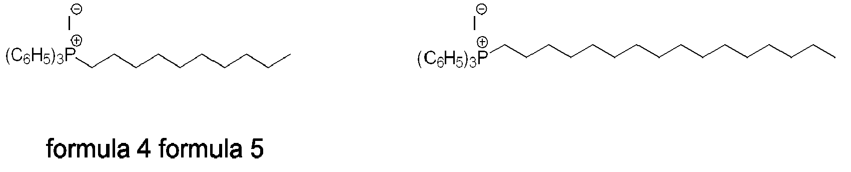

These salts were used against weeds, popular in Poland, such as: stinging nettle (*Urtica dioica* L.), dandelion (*Taraxacum officinale* FH Wigg.), heartsease (*Viola tricolor*L.)*,* gallant-soldier (*Galinsoga parviflora* Cav.), white goosefoot., fat hen (*Chenopodium album* L.), sorrel (*Rumex acetosa* L.) and barnyardgrass (*Echinochloa crus-galli*). By using the solution according to the invention, technological effects were obtained and was developed a methodology for preparation of a spray solution containing different concentrations of biologically active substances, allowing a selective or a total control of undesirable plants, as well as economic effects associated with a relatively low cost of production of phosphonium salts containing iodide anion, which makes the obtained formulations competitive for existing on the market herbicidal compositions.

The following are examples of application of the present invention, phosphonium salts, containing iodide anion, and their identified herbicidal properties. The following examples also show how to prepare salts for the use, and illustrates their effects.

### Description of embodiments

### Example I.

The 0.5%, 1.0% and 2.0% pray solutions containing triphenylmethylphosphonium iodide as an active ingredient.

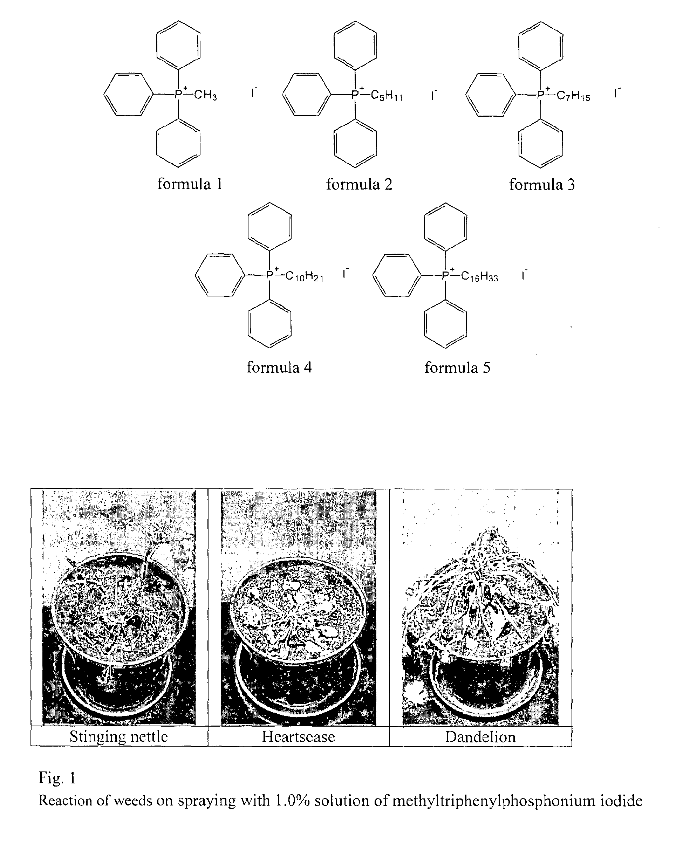

The 0.5% and 1.0% spray solutions were obtained by dissolving, respectively 50 mg and 100 mg of triphenylmethylphosphonium iodide in 10 cm³ of distilled water. The 2.0% spray solution was obtained by dissolving 200 mg of triphenylmethylphosphonium iodide in 2 cm³ of methanol and the whole mixture was top up to 10 cm³ with distilled water. Thus, obtained suspensions were sprayed on weeds (stinging nettle, dandelion and heartsease) in the amount of 3 cm³ of suspension per plant. The use of 0.5% spray solution allows a destruction of weeds with morphological and anatomical structures similar to the heartsease. The heartsease plants which were sprayed with 0.5% solution of triphenylmethylphosphonium iodide solution, completely dried up after about two weeks after the procedure. Spraying weeds with 1.0% solution of triphenylmethylphosphonium iodide solution caused the heartsease plants total withered after about two weeks, stinging nettle after a week and dandelion after nearly a month after the procedure (Figure 1). The use of 2% solution of ionic salt led to drying out of the heartsease plants and stinging nettle after a week after spraying, and dandelion after 4 weeks after spraying by the discussed spray solution.

### Example II

The 0.5%, 1.0% and 2.0% spray solutions containing triphenyl-n-pentylphosphonium iodide as an active ingredient.

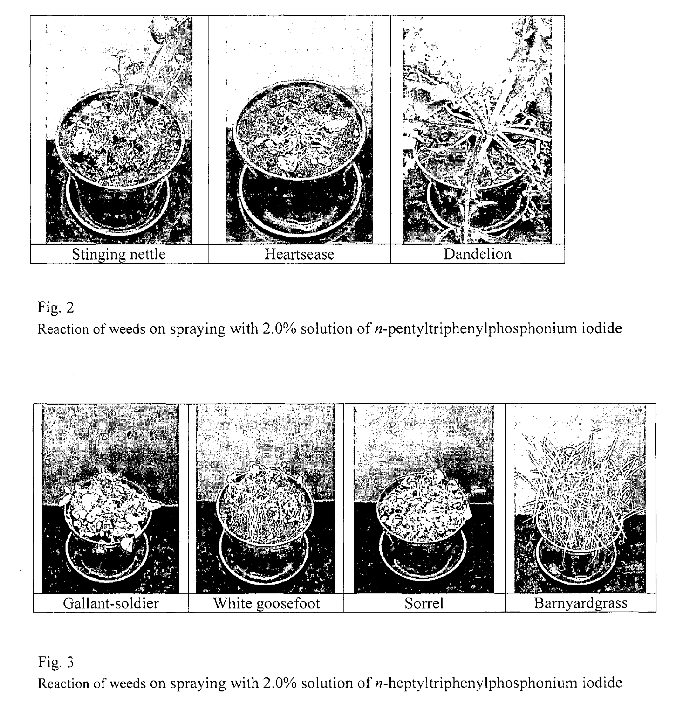

The 0.5% spray solution was obtained by dissolving 50 mg of triphenyl-n-pentylphosphonium iodide in 1 cm³ of methanol and the resulting mixture was top up to 10 cm³ with distilled water. The 1.0% and 2.0% spray solutions were obtained by a respective dissolving of 100 mg or 200 mg of triphenyl-n-pentylphosphonium iodide in 2 cm³ of methanol and the resulting mixture was top up to 10 cm³ with distilled water. Thus obtained suspensions were sprayed on weeds (stinging nettle, dandelion and heartsease) in the amount of 3 cm³ of suspension per plant. Solutions containing triphenyl-n-pentylphosphonium iodide show a relatively strong herbicidal effect. The use of 0.5% spray solution allows to fight only heartsease, heartsease plants completely dried up after 2 weeks after the procedure, while both stinging nettle and dandelion showed a resistance to the discussed spray solution. The 1.0% spray solution of triphenyl-n-pentylphosphonium iodide already allows a destruction of weeds not only with morphological and anatomical structure similar to the Heartsease, and is also effective for stinging nettle. Heartsease and stinging nettle plants sprayed with 1.0% solution of triphenyl-n-pentylphosphonium iodide completely dried up about a week after the procedure. The use of 2.0% spray solution allows to fight all weeds used in the experiment. Heartsease and stinging nettle plants sprayed with 2.0% triphenyl-n-pentylphosphonium iodide solution completely dried up after a week after the procedure, and the dandelion after about 4 weeks after procedure, as illustrated in Figure 2. The applied spray liquid has the property of a total herbicide.

### Example III

The 0.5%, 1.0% and 2.0% spray Isolutions containing triphenylheptylphosphonium iodide as an active ingredient.

The 0.5%, 1 % and 2% spray solutions were obtained by dissolving, respectively 50 mg, 100 mg and 200 mg of triphenylheptylphosphonium iodide in 4 cm³ of methanol and the resulting mixture was top up to 10 cm³ with distilled water. Thus obtained suspensions were sprayed on weeds (white goosefoot, gallant soldier, sorrel and barnyardgrass) in the amount of 2 cm³ of suspension per plant. Prepared and used according to the invention, spray solutions, containing triphenylheptylphosphonium iodide as an active ingredient, proved to be very effective herbicides against gallant-soldier, fat hen and sorrel, the first change on plant leaves was observed after 2 days after spraying. In case of use of the 0.5% solution, a distinct change in leaves of gallant soldier has been observed, the same applies to sorrel. After about a week after spraying more than half of the plants of gallant soldier dries completely. The spray solution with a concentration of 0.5% also effectively controls white goosefoot, sprayed plants dries completely after about 2 weeks after spraying. After applying the Ispray solution with a concentration of 1.0%, faster death of weeds was observed; gallant soldier, fat hen and sorrel dried up about a week after spraying. Even more pronounced herbicidal properties was observed for weed spraying with 2.0% solution of triphenylheptylphosphonium iodide. White goosefoot and sorrel plants completely dry out after four days, and gallant soldier after 6 days after the procedure performed as illustrated in Figure 3. In addition, 2.0% spray solution exhibits herbicidal effect in relation to weeds difficult to combat - barnyardgrass. After about a week after spraying, marked chlorotic and necrotic changes on barnyardgrass leaves were found, leading to the gradual drying of the plants (Figure 3).

### Example IV

The 0.5%, 1.0% and 2.0% spray solutions containing triphenyldecylphosphonium iodide as an active ingredient.

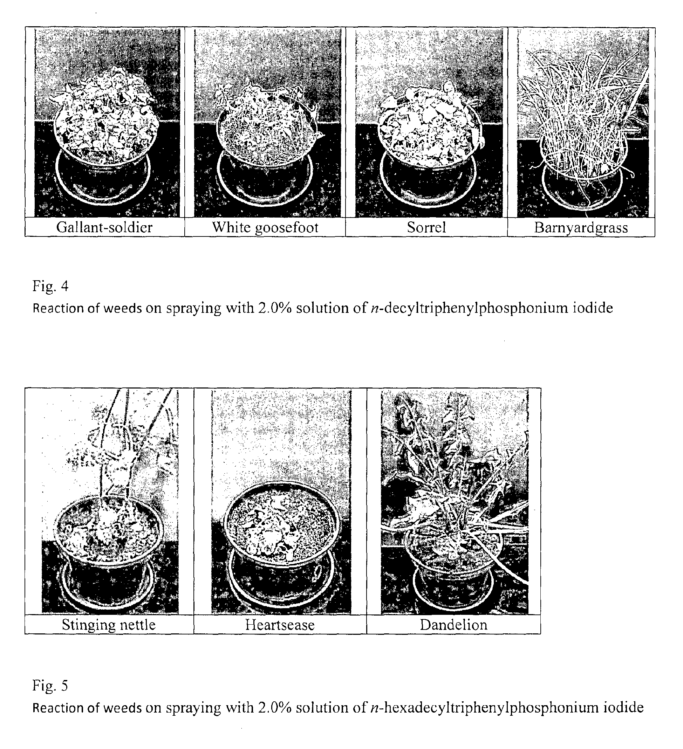

The 0.5%, 1 % and 2% spray solutions were obtained by dissolving, respectively 50 mg, 100 mg and 200 mg of triphenyldecylphosphonium iodide in 4 cm³ of methanol and the resulting mixture was top up to 10 cm³ with distilled water. Thus obtained suspensions were sprayed on weeds (stinging nettle, dandelion and heartsease) in the amount of 2 cm³ of suspension per plant. The 0.5% spray solution turned out to be effective only in case of white goosefoot while 1.0% solution of triphenyldecylphosphonium iodide affects herbicidally also against gallant soldier. Only the use of 2.0% spray solution, allowed effective control of white goosefoot (plants dry out completely after about a week after spraying), gallant soldier (after 10 days half of the plants turns brown and dries) and sorrel, where external changes on the leaves, and consequently drying out of the plant are found after 8-10 days following spray application. Triphenyldecylphosphonium iodide solutions prepared according to the invention show little herbicidal activity against barnyardgrass plants (Figure 4).

### Example V

The 0.5%, 1.0% and 2.0% spray solutions containing triphenylhexadecylphosphonium iodide as an active ingredient.

The 0.5% spray solution was obtained by dissolving 50 mg of triphenylhexadecylphosphonium iodide in 1 cm³ of methanol and the resulting mixture was top up to 10 cm³ with distilled water. The 1.0% and 2% spray solutions were obtained by dissolving, respectively 100 mg and 200 mg of triphenylhexadecylphosphonium iodide in 2 cm³ of methanol and mixture was top up to 10 cm³ with distilled water. Thus obtained suspensions were sprayed on weeds (stinging nettle, dandelion and Heartsease) in the amount of 3 cm³ of suspension per plant. Solutions containing triphenylhexadecylphosphonium iodide have little herbicidal effect. The 0.5% spray solution is not active in the control of weeds which have been described in the present invention, while 1.0% solution of triphenylhexadecylphosphonium iodide exhibits herbicidal effect against heartsease, causing the drying out of plants after about 1 week after spraying, and stinging nettle where distinct changes were observed at week 3 after spraying. Application to the procedure of spraying weeds by 2% spray solution resulted in effective control of the plants of heartsease (plants dried out after about two weeks after spraying) and stinging nettle, for which changes in the leaves were found after about three weeks after spraying. Dandelion turned out to be a plant which was resistant to all spray solutions, which were obtained in three concentrations of the invention (Fig. 5).

### Industrial applicability

### Citation list

### Literature:

1. Becher,H-M., Albert, G., Curtze, J., US5,336,671, 09.08.1994
2. Bachowska,B., Kazmierczak-Baranska,J., Cieslak,M., Nawrot,B., Szcz 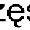 sna, D., Skalik, J.,Batczewski, P., ChemistryOpen, 2012,1,33-38
3. Preston,W.H., US 3,230,069; 18.01.1966
4. Berenson, H., Trenton, N.J., Dornbush, A.C, US 3, 364,107
5. Brown, M.J., US 4,173,462; 06.10.10
6. Peterson, L.W., Bozarth, G,A,. Piligram, K.H.G, US 4,173,463, 06.10.1979
7. Large, G.B., Buren, L., 4,341,549; 27.07.1982
8. Orvik, J., US 4,118,373 A, 04.05.1977

Fenton, J.T., US 4574158, 01.10.1982; US 4513144, 03.10.1982

## Claims

1. The use of ionic salts containing phosphonium cation and halide anion, represented by formula [PR₄⁺]X⁻, wherein R is aryl or a straight or branched alkyl group CₙH₂ₙ₊₁(n = 1-20), while X is any anion selected from the group consisting of halide anions, especially iodide anion, as a means of herbicidal properties.

2. A method according to the claim. 1, **characterized in that** as the phosphonium salts triphenylmethylphosphonium iodide, triphenyl-n-pentylphosphonium iodide, triphenylheptylphosphonium iodide, triphenyldecylphosphonium iodide and triphenylhexadecylphosphonium iodide are used.

3. A method according to the claim. 1, **characterized in that** phosphonium salts are used as working solutions with concentrations of 0.5%, 1.0% and 2.0% of biologically active substances, preferably obtained from phosphonium salts by dissolving them in a small amount of methanol, followed by addition of water, and spraying the weeds to selectively or totally eradicate unwanted plants.
